# EUROPEAN PATENT APPLICATION

(11) **EP 2 196 691 A2**
(43) Date of publication of application: **16.06.2010**
(21) Application number: 09015335.4
(22) Date of filing: 10.12.2009
(51) Int. Cl.: F16D 41/06

(54) **Starter plate with a friction freewheel system by rollers**

(30) Priority: 15.12.2008 BR PI0805630
(71) Applicant: ZEN SA INDUSTRIA METALURGICA, Santa Catarina (BR)
(72) Inventor: Damian, Andrei, Brusque Santa Catarina (BR); Gomez, Marcelo Peregrina, Brusque Santa Catarina (BR); Comandolli, Fernando, Brusque Santa Catarina (BR)
(74) Representative: Lorente Berges, Ana

(57) **Abstract**

The present invention refers to the technical field of starter plates in general, more specifically a starter plate with a friction free wheel system by rollers (3), which is applied to internal combustion engines of motorcycles or vehicles making use of a similar starter motor with the purpose to improve performance, increase durability, reduce the final price of the product and simplify manufacturing and assembly processes. The assembly preserves the locking feature under high torque in one direction (joined element by the input torque of the driver element) and, after starting, it allows free turning of the joined element in the opposite direction, which then has higher rotation than the driver element.

## Description

The present invention refers to the technical field of starter plates in general, more specifically a stater plate with a friction free wheel system by rollers, which is applied to internal combustion engines of motorcycles or vehicles making use of a similar starter motor. The purpose is to improve performance, increase durability, reduce the final price of the product and simplify manufacturing and assembly processes. The assembly maintains the lock-up function under high torque in one direction (joined element by the input torque from the driver element) and, after starting, it allows free rotation of the joined element in the opposite direction, which then has higher rotation than the driver element.

### Background

In starting systems for automotive engines, the rotation of the starter motor transmits torque to the crankshaft of the combustion engine allowing it to start its independent operation. When the combustion engine starts operation, the torque of the crankshaft should not be transmitted to the starter motor. For this reason the free wheel system is positioned between the starter motor and the combustion engine. Internal combustion engines as used for motorcycles and similar such as "ATVs" and "snowmobiles" require a compact starting system to be inserted within the small space available at such vehicles.

### State of the art

Currently systems are characterized in two ways as follows.

The first system has an embodiment composed by cam-shaped elements, radially located and supported (below and above) by a pair of rings with specific profile. Internally, the system is supported by a cage with rectangular section geometry, keeping the individual assembly of components, configuring a system known as sprag clutch. After assembly, sprag clutch is inserted within an external disc, which is then integrated in the combustion engine, and the external ring is screwed to the alternator rotor. The inner region of the sprag clutch has extended intermediary gear is inserted and linked to the starter motor. On that extension, the starter motor and the combustion engine suffer relative sliding. Such configuration allows the engine rotational speed to generate the centrifugation of sprag elements, thus avoiding an intermittent contact with the extended gear race to the stationary starter motor, consequently avoiding wear. This complex construction results in high manufacturing costs and obviously higher product final price for the consumer. Such constructive concept also does not present a satisfactory durability due to the premature wear of the cam-shaped elements, possibly improving performance.

A second embodiment of a starter plate as present in the market consists of a simpler free wheel system, which makes use of the external disc as an integral component of the starter plate, different from the previous concept wherein the disc is a part of the combustion engine. This external plate or disc contains cavities with a locking angle, performing the role of a cammed profile, and small rollers are inserted into such cavities. The cavities contain grooves, in which springs are inserted and press the rollers against the race. The objective of such grooves is to keep the correct operation of internal springs, by guiding them. Such system is also characterized by containing a reduced quantity of small rollers with relatively exaggerated proportions. Since it has a reduced working life, this project does not meet the requirements of consumers, who need to replace the starter plate very frequently. The main causes for failure are as follows: slipping at the time of locking torque, resulting from wear of rollers, and damage in the external disc for reduced wall thickness; and a second disadvantage is the difficulty to keep its internal components retained in the system, at the time of assembling the set.

Considering failures as found in concepts offered by the market, it was verified the possibility to improve the project for an increased working life, performance and cost reduction by making use of the present invention.

In order to reach a project with the result of a better performance, a few aspects inherent to free wheel system projects have been considered:
- The starter which its starter plate presents a high number of small rollers ensures that the axis does not slip at the time of applying the starting torque, due to the high limit of admissible coupling torque due the exaggerated sizing. Other consequences of exaggerated sizing are the increase in the free wheel torque value, wasting of components and consequent higher cost.
- On the other hand, a reduced number of small rollers reduce the durability of the item, concentrating reaction loads of the rollers against the cam profile. Furthermore, it may reduce the admissible slipping torque to a lower value than required, thus not meeting the required specification.
- High locking angle of the cam profile allows a higher admissible torque value for the system up to the slipping limit. Under this situation of extreme slope of the cam curve, when the starter motor transmits torque to the combustion engine, the rollers are submitted to high load values between the race (the motorcycle crankshaft in this case) and the cammed surface. The high slope value and consequently high load potentialize throwing of said roller against the spring, thus pressing them until its solid body causes spring failure and reduced durability. Also, at the time of surpassing , when the external board overtakes the rotation of the starter motor as transmitted by the shaft, rollers under high acceleration cause a resulting centrifugal force with high module over the roller due to the high sloping of the profile. Thus rollers are bounced under high speed against the internal springs, compromising durability of the system. Despite the reduced mass of the roller, high resulting force values are generated due to high acceleration and, after a few cycles, internal springs fatigue is generated.
- On the other hand, a small locking angle also reduces the maximum admissible torque before roller sliding. The project is then undersized, thus resulting in part failure and low performance. A small locking angle requires high system rotation to centrifugate the rollers, under the risk that the motor under low rotation keeps constant roller friction contact with the race, causing premature roller wear and system failure.

### Advantages of the present invention

The proposed invention herein has arisen to solve the problems as presented previoulsy, by means of a set of simple and efficient solutions, developed to improve the operation and resistance, make maintenance easier and reduce manufacturing costs of starter plates as applied to internal combustion engines of motorcycles or similar applications, Therefore, the product becomes ideal to compete with the models currently available in the market or as a replacement for them.

The starter plate of the present invention has a friction free heel system with rollers which is extremely efficient in comparison with the models mentioned in the current state of the art, wherein rollers, spring guides and the springs of the free-wheel system springs are located between the cammed profile of the external disc and cage extensions. Therefore, it is possible to improve performance by inserting a correct number of rollers and springs, not affecting the strength of the external disc; improve the locking angle; make assembly and installation casier since the internal parts (rollers, spring guides and springs) are hold in position by the external disc and the cage.

Besides simpler manufacture and reduced final costs for production, the invention presents:
- higher durability of the assembly, since it is designed to avoid failures seen in the current state of the art, thus assuring high quality and performance;
- reinforced structure to avoid breakage by stress concentration and fatigue, which has been analysed using a finite element simulation software indicating the maximum tensions to which the system will be subjected and, from these values, thermo-chemical treatments and materials necessary to reach the required characteristics have been accurately selected;
- the length of rollers is directly related to the maximum admissible torque, as well as the number of rollers; therefore, the size of the system has been defined according to the available space to accommodate them.

The above referenced factors have been defined by means of successive iteractions by a software routine, simulating values of features, locking angle, number of rollers, based on input values such as roller height, rolle diameter and race diameter.

The CAD tool has been used as an aid to the project, by transforming the mathematical model as simulated into a computational model. The tool has been used to combine components, respecting their corresponding proportions in the assembly, satisfying the locking angle by means of calculated measurements and components such as a cage, spring guides and internal springs.

A motorcycle has been used for the field tests. Considering the physical prototype, the new concept has been tested in the engine of the motorcycle and confirmed its correct operation and efficiency.

### Disclosure of the invention

The starter plate with friction free wheel system by rollers as presented herein is composed by an external disc, comprised by a single structure made of steel alloys, which is provided with a central circular opening or cam race, and an internal ring or prominence serving to locate and sustain the sets (of rollers, guides and springs) in a circular disposition; being these limited on the top and inside by a plastic cage or profiled ring, provided with various extensions located crosswise, each one with rounded walls serving to support and fit the rollers, springs and cam prominences.

The present invention includes a simple construction based on rollers located radially internally contacting a cylindrical race located at the core of the construction, and externally in contact with a surface in the form of a cam, thus providing free wheel by turning in one direction and locking in the opposite way. Its durability is increased by the cam race design which avoids fatigue of its internal springs and reaches higher torque limit value for sliding. Said feature allows the number of rollers to be the best cost-benefit ratio for an appropriate compromise of maximum sliding torque required and number of rollers.

Another advantage of the invention is the plastic cage or profiled ring which supports all internal components responsible to lock the system, such as springs, rollers and spring guides, so to keep said components assembled before joining the cage to the external ring, thus facilitating the installation of said system. This characteristic is possible due to the geometry of the cage, which allows the components to be confined, thus avoiding disassembly while the system is transported up to the moment of the installation of the starter plate in the engine. The rollers race is an extension of the engine ring gear (a component of the internal combustion engine) which is geared to the motor by the starting engine pinion, and such extension of the ring gearwill onlybe present at the free-wheel system when it is assembled at the combustion engine, Hence, until the insertion of the free-wheel system into the engine, rollers would he subject to disassembly and fall for not having the internal support of the roller race. This problem has been solved by the geometric configuration of the cage component, which supports rollers during transportation, until the time of assembly in the motor.

Objectives, advantages and additional important characteristics of the invention presented herein may be more easily understood when read jointly with the attached figures, wherein:
Figure 1 shows a perspective view of the starter plate with a friction-free wheel system by rollers.
Figure 2 shows an exploded view of the starter plate with a friction-free wheel system by rollers.
Figure 3 shows an assembled view (rollers, guides and springs), with the cage, of the starter plate assembly with a friction-free wheel system by rollers.
Figure 4 shows a cutting view of the cross section of the full starting system of a motorcycle engine and the starter plate with a friction-free wheel system by rollers.
Figure 5 shows a radial section view of the starter plate with a free wheel system, showing in further detail of the arrangement of internal components of the frictionfree wheel starter plate by rollers.
Figure 6 shows a radial section view of the starter plate with frictionfree wheel system by rollers, which object is to define a pressure angle and cage geometry inhibiting disassembly of the components.
Figure 7 shows a section view of the side view of the starter plate with a frictionfree wheel system by rollers.
Figure 8 shows a detailed cross section view containing a suggestion of the fixing system for a plastic cage next to the external disc.
As inferred from the attached figures showing and integrating the present description of the present invention of "Starter plate with a FrictionFree Wheel System by Rollers" and used to transmit torque from the starter plate to the crankshaft of the internal combustion engine (A) of motorcycles and similar and having free wheel function when the motor rotation overcomes initial rotational speed, it is comprised of a starter plate (1) with free wheel system, which is composed by an external disc (2) with single structure made of steel alloys, which is provided with three holes (2A) for screws, a central circular opening (2B) with walls shaped as a cam race (2C) and an internal ring or prominence (2D), serving for circular locating and support of three or more sets of small rollers (3), spring guides (4) and springs (5); being these limited on the top and inside by a profiled ring or cage (6), preferably made of injected plastic, which is provided with various extensions (6A) crosswise located, each one with rounded walls (6B) serving for the support and fitting of rollers (3), springs (4) and cam prominences (2C1).

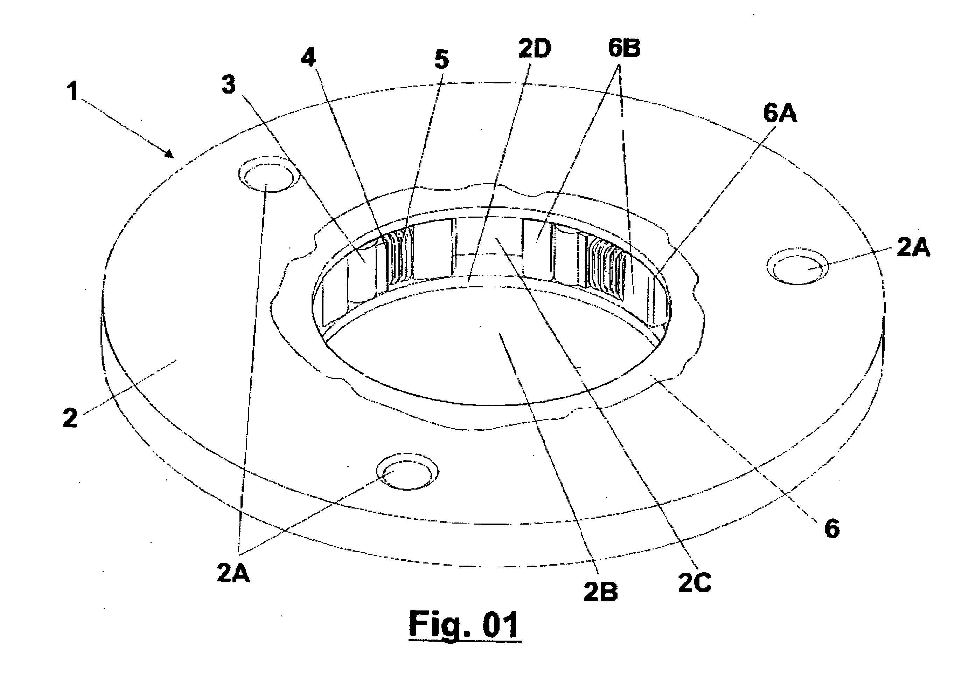

Figure 1 shows a perspective view of the starter plate (1) with free-wheel system, as assembled, wherein the external disc (2) is shown with the three holes (2A), the central circular opening (2B), the cam race (2C), the internal ring or prominence (2D), the sets of rollers (3), spring guides (4), springs (5), the profiled ring or cage (6) and the extensions (6A) with the rounded walls (6B).

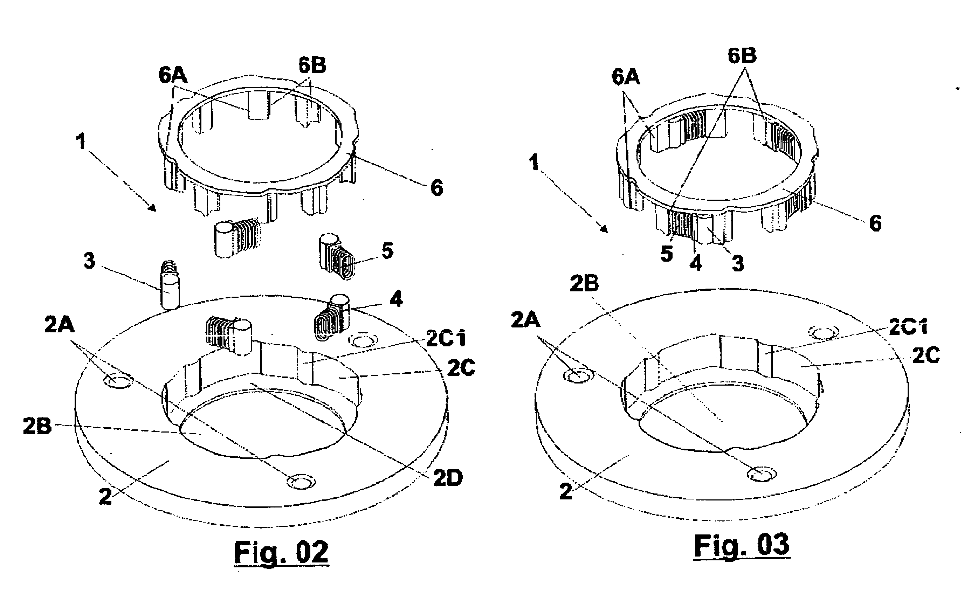

Figures 2 and 3 show the exploded views of the starter plate (1) with a free-wheel system showing the external disc (2) with the three holes (2A), the central circular opening (2B), the cammed race (2C), the internal ring or prominence (2D), cam prominences (2C1), sets of rollers (3), guides of springs (4), springs (5), profiled ring or cage (6), extensions (6A), with rounded walls (6B) and cam prominences (2A1), wherein Figure 3 shows the sets (rollers (3), guides of springs (4) and springs (5)) attached to the profiled ring or cage (6) by means of extensions (6A).

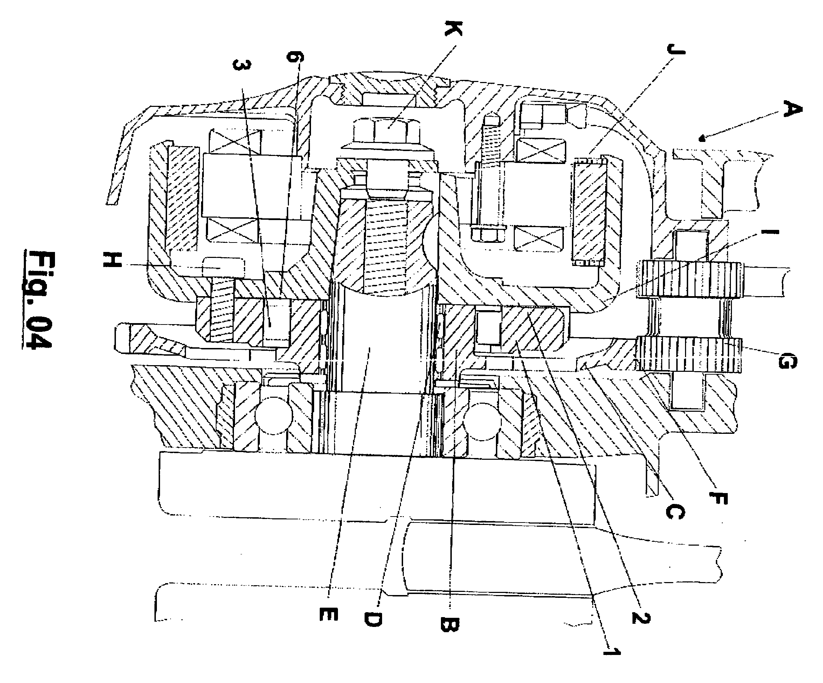

Figure 4 shows a section view of the starter plate (1) with free wheel system with the external disc (2), sets of rollers (3), spring guides (4), springs (5) and profiled ring or cage (6); applied to a motorcycle engine (A), highlighting the assembly under the extension (B) (roller race) of the ring gear (C). The ring gear (C) is assembled by means of interference adjustment over a bearing (D) which is internally supported by the edge of the axis (E) of the combustion engine crankshaft (A); teeth (F) of the ring gear are connected to the intermediate gear (G) which, on the other hand, is directly connected to the electrical starting engine pinion not shown on the Figure. Externally, the starter plate (1) is fixed by means of screws (H) and put in the center by means of a recess on the rotor (I), the rotor is a part of an AC alternator (J). The alternator (J) is directly linked by the rotor (I) to the edge of the axis (E) of the crankshaft and fixed by the screw (K).

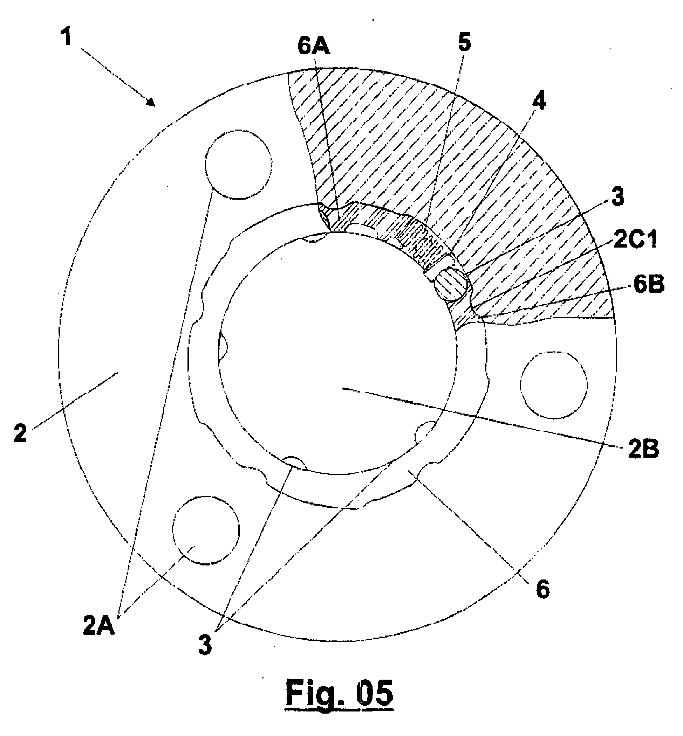

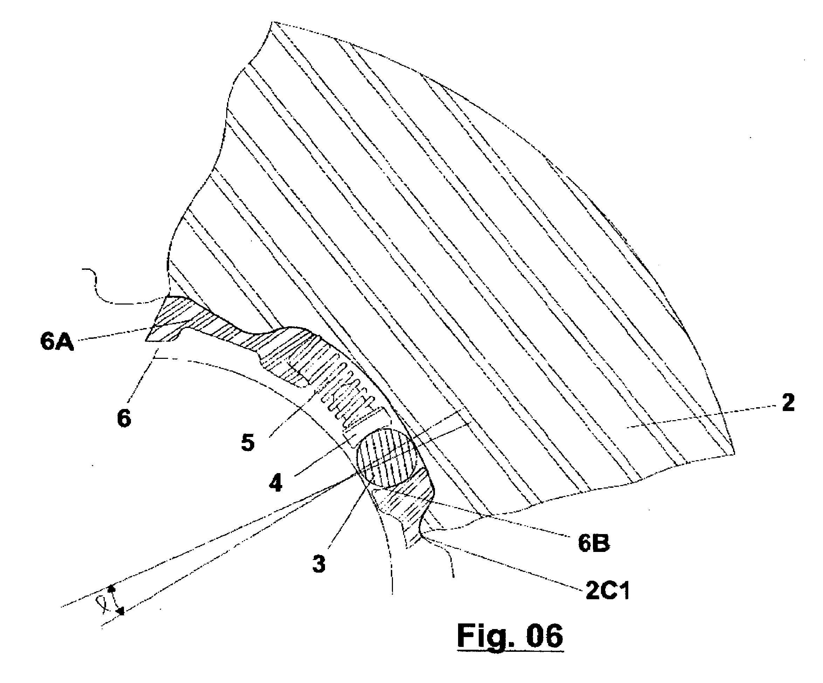

Figures 5 and 6 show detailed components and a peripheral view of the geometry of the invention as per the description, showing a section view of the starter plate (1) with the external disc (2), the three holes (2A), a central circular opening (2B), the cam race (2C), the internal ring or prominence (2D), the sets of rollers (3), spring guides (4), springs (5), the profiled ring or cage (6) and the extensions (6A) with the rounded walls (6B).

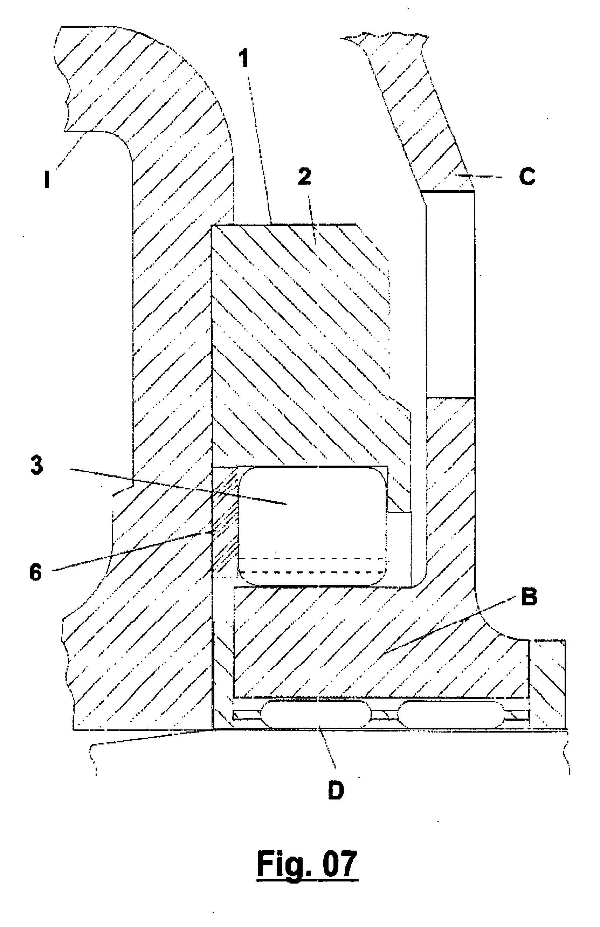

Figure 7 shows a section detail of the starter plate (1), will the external disc (2), small rollers (3) and the profiled ring or cage (6); the ring gear (C) with the extension (B); rollers (D) and rotor (I).

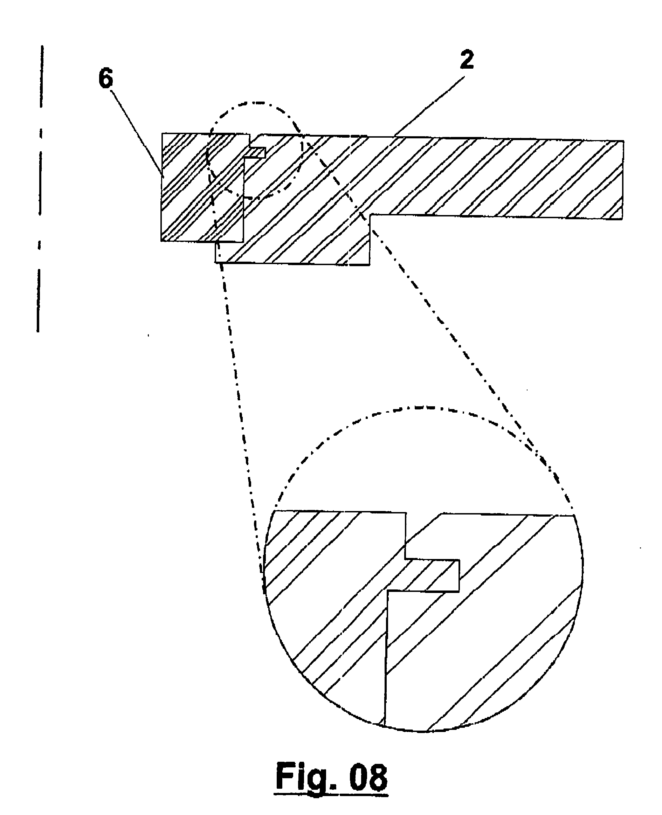

Figure 8 shows a section detail of a suggestion of a fixing system for the profiled ring or cage (6) next to the external disc (2). The cage (6) may also be fixed next to the external disc (2) by adjusting the interference in a sufficient way to keep the set assembled.

The external disc (2) is made of steel alloys in different compositions and the manufacturing processes may be by: cold conformation, tepid or hot conformation (forged), sinterizing or die casting.

Small rollers (3) are preferably made of different metal alloys or alternatively ceramic materials. Small rollers may have different dimensions and geometries and the number of rollers (3) as applied may vary according to the dimensions of the starter plate (1).

The guides of springs (4) are preferably made of plastic and are provided with one or more fitting pins for the spring (5).

Springs (5) may vary in shapes and forms, and may be: helicoidal with round or square cross section or plate springs.

The profiled ring or cage (6) is preferably made of injected plastic, but may be made of another material, also presenting a different disposition, as long as the same basic characteristics are maintained.

The starting process begins by the torque generated from the electrical starter motor, not shown in the figure, transmitting torque to the ring gear (C) by means of the intermediate gear (G). Through the ring gear (C), torque is transmitted to the starter plate (1) by means of external walls (races) of the extension (B) making direct contact with small rollers (3), not moving the axle (E) by making use of rolles (D). Upon receiving motion by friction, small rollers (3) get locked, allowing torque transmission from the ring gear (C) to the external disc (2) which, by the fixed screws (H), starts to move the axle (E) of the crankshaft, allowing the starting of the combustion engine of the motorcycle. In this brief moment where the combustion engine (A) starts working, there is a transition between the engine "being moved" to "moving" the electrical engine, called the surpassing . When the combustion engine starts the operation phase, it rotate the crankshaft at a rotation above the rotation of the electrical starting engine. To avoid the engine rotation from being transmitted to the starting engine at the moment of surpassing the starter plate (1) has a free wheel system allowing for free rotation in the opposite direction of the turning of the starting engine. The external disc (2) then rotates under higher rotation than the input ring gear rotational speed (C) through the point of contact of the extension (B), where there is relative sliding in a brief moment, until such sliding is reduced by increasing the rotation of the external disc (2) and the small rollers (3) linked to it are centrifugated by the resulting centrifugal force of the masses.

The starter plate has a frictionfree wheel system by rollers under the principle of locking through a given number of small rollers (3). These are externally confined by the cam race (2C); additionally by an internal ring or prominence (2D) of the external disc (2); laterally by the spring guide (4) and by the extension (6A) of the profiled ring or cage (6); frontally by the internal base of the profiled ring or cage (6), and is internally free from support. The geometry of extensions (6A), the profiled ring or cage (6) has been precisely sized to support small rollers (3), so that the springs (5) form a slope and the force value of the spring is higher than the value of weight force, thus avoiding the fall and disassembly of the small roller. Therefore, the small roller (3) is inhibited from being thrown through the internal side of the starter plate (1) during transportation or installationin the engine. The system also has a spring guide (4) for the correct linear compression of the spring (5) without having its "folding" (undesirable situation causing a failure in the system). Another feature of the guide is to serve as an end stop to limit the compression of the spring, otherwise the spring may get compressed until the solid length, causing spring failure after repeated shocks between coils. Springs have their other end supported by the extended profiled ring or cage (6) serving as a support.

The proposed system of starter plate (1) when assembled at the engine (A) has the central circular opening (2B) involved in the ring gear (C) extension (B), thus providing for contact with the small rollers (3). Frontally, the plate is screwed to the rotor (I) by screws (H), avoiding the displacement of the cage and the system; subsequently, the internal flange avoids disassembly in that direction. A recess in the rotor (I) assures the concentricity of the starter plate (1) over the ring gear (C), thus assuring synchronism in locking of the small rollers (3), as well as the distribution of small roller (3) efforts over the external disc (2).

To avoid disassembling of small rollers (3) and internal springs (5) while transporting and handling the starter plate (1), before insertion into the engine (wherein the axis (E) keeps components as assembled), the required force of the internal spring (5) and sloping angle of supports of the profiled ring or cage (6) have been mathematically calculated by means of the system geometry, to ensure the assembly of internal components.

Another consideration was the disassembling of the profiled ring or cage (6) and the external plate (2), since the plate is subject to falling until being screwed to the surface of the rotor (I) confining the cage. To solve this problem, the cage may be sized to suffer an adjustment by interference or the addition of a recess on the external plate (2) at the region of the involving perimeter, as well as a prominence at the base of the profiled ring or cage (6) to create a locking fitting.

## Claims

1. "STARTER PLATE WITH A FRICTIONFREE WHEEL SYSTEM BY ROLLERS" used to transmit the torque from the starter plate to the crankshaft of the internal combustion engine (A) for motorcycles and similar and having free wheel function, when motor rotation overcomes initial rotations, **characterized by** a starter plate (1) with free wheel system, which is composed by an external disc (1) with single structure made of steel alloys, which is provided with three holes (2A) for screws, a central circular opening (2B) with walls shaped as a cammed race (2C) and an internal ring or prominence (2D), serving for circular locating and support of three or more sets of small rollers (3), spring guides (4) and springs (5); being these limited on the top and inside by a profiled ring or cage (6), preferably made of injected plastic, which is provided with various extensions (6A) crosswise located, each one with rounded walls (6B) serving for the support and fitting of rollers (3), springs (4) and cam prominences (2A1).

2. "STARTER PLATE WITH A FRICTIONFREE WHEEL SYSTEM BY ROLLERS" of claim 1, **characterized by** the external disc (2) being made of steel alloys with different compositions, manufactured by means of the processes of: cold conformation, tepid or hot conformation (forged), sinterizing or die casting.

3. "STARTER PLATE WITH A FRICTIONFREE WHEEL SYSTEM BY ROLLERS" of claim 1, **characterized by** the number of small rollers (3) as applied varying according to the measurements of the starter plate (1).

4. "STARTER PLATE WITH A FRICTIONFREE WHEEL SYSTEM BY ROLLERS" of claim 1, **characterized by** rollers (3) being preferably made of different metal alloys or alternatively of ceramic materials, also presenting different geometries and dimensions.

5. "STARTER FLATE WITH A FRICTIONFREE WHEEL SYSTEM BY ROLLERS" of claim 1, **characterized by** presenting more than one row of rollers (3) and cammed race (2C), forming multiple parallel free-wheel systems to assure maximum sliding torque.

6. "STARTER PLATE WITH A FRICTION FREE WHEEL SYSTEM BY ROLLERS" of claim 1, **characterized by** the profiled ring or cage (6) being preferably made of injected plastic, but may be of another material and also have different disposition.

7. "STARTER PLATE WITH A FRICTION FREE WHEEL SYSTEM BY ROLLERS" of claim 1, **characterized by** the springs (5) being made with different shapes and sizes as follows: helicoidal with round or squre cross section or plate springs.

8. "STARTER PLATE WITH A FRICTION FREE WHEEL SYSTEM BY ROLLERS" of claim 1, **characterized by** spring guides (4) being preferably made of plastic and being provided with one or more fitting pins for the spring (5).

9. "STARTER PLATE WITH A FRICTION FREE WHEEL SYSTEM BY ROLLERS" of any of claims 1 and 6, **characterized by** containing fixing prominences similar to locks or appropriate sizing for friction fixing by interference.
